# FASCICULE DE BREVET EUROPEEN

(11) **EP 2 915 445 B1**
(45) Date de publication et mention de la délivrance du brevet: **14.12.2016**
(21) Numéro de dépôt: 14157590.2
(22) Date de dépôt: 04.03.2014
(51) Int. Cl.: A44C 5/10, F16B 33/02, F16B 33/00, F16B 39/10

(54) **Dispositif et procédé d'assemblage à pivotement d'au moins deux pièces, ensemble correspondant de deux pièces assemblées**
Vorrichtung und Verfahren zum drehbaren Zusammenbau von mindestens zwei Teilen, und Einheit aus den zwei zusammengebauten Teilen
Device and method for assembling a pivot of at least two parts, corresponding set of two assembled parts

(43) Date de publication de la demande: 09.09.2015
(73) Titulaire: ROLEX SA, 1211 Genève 26 (CH)
(72) Inventeur: Moille, Daniel, 74140 Yvoire (FR)
(74) Mandataire: Moinas & Savoye SARL

(56) Documents cités:
- EP-A1- 2 462 829
- CH-A5- 695 389
- FR-A1- 2 746 267

## Description

L'invention concerne un dispositif d'assemblage, ou d'attache, à pivotement d'au moins deux pièces, notamment deux maillons d'un bracelet, par exemple d'un bracelet de montre.

Un tel dispositif d'assemblage permet d'assembler des maillons, généralement par le biais d'un axe de guidage en pivotement et d'une vis, les maillons assemblés pouvant se déplacer en rotation les uns par rapport aux autres.

Un assemblage de ce type est exposé à un risque de dévissage intempestif. Ce problème, bien connu des horlogers, est causé par les mouvements répétés des maillons les uns par rapport aux autres lors du porter du bracelet ou par des chocs.

Pour résoudre ce problème, on connaît par le document CH695389 un dispositif d'assemblage de mailles d'un bracelet de montre, permettant d'assembler des mailles, par exemple deux mailles extérieures et une maille centrale, pouvant se déplacer angulairement les unes par rapport aux autres. Ce dispositif d'assemblage comprend une vis munie d'une tête, à l'une de ses extrémités, et d'une partie filetée, à son autre extrémité. Une partie médiane de la vis, de forme cylindrique, joue le rôle d'axe de guidage en rotation de la maille centrale. Pour limiter le risque de dévissage intempestif, un canon tubulaire, en matériau élastique et pourvu d'un rétrécissement annulaire, est chassé dans un perçage de passage de la vis traversant l'une des mailles extérieures. La vis comprend une gorge annulaire destinée à recevoir le rétrécissement du canon. Lors de l'assemblage, la vis est introduite dans le canon jusqu'à engagement de son rétrécissement dans la gorge annulaire de la vis. Grâce à cela, le canon exerce sur la vis une force de serrage radiale qui s'ajoute à la force de maintien exercée par les filets de la vis. La vis est ainsi bloquée axialement par rapport au maillon. Une telle solution nécessite d'assembler plusieurs composants, ce qui implique un temps d'assemblage relativement long. En outre, la force de serrage exercée par le rétrécissement annulaire du canon sur la vis devant être importante, les opérations d'assemblage et/ou de désassemblage peuvent s'avérer difficiles.

La présente invention vient améliorer la situation.

A cet effet, l'invention concerne un dispositif d'assemblage pour attacher à pivotement au moins deux pièces, comportant une vis destinée à être vissée dans une première pièce et portant un axe de guidage en pivotement d'une deuxième pièce, caractérisé en ce que l'axe comprend au moins une zone de blocage en rotation ayant une forme adaptée pour coopérer avec une zone de forme correspondante de la première pièce, afin de bloquer en rotation ledit axe.

Selon l'invention, pour remédier au risque de dévissage intempestif de la vis et de désolidarisation des pièces, l'axe de pivotement est bloqué en rotation, notamment bloqué en rotation à moindre jeu, par l'une des pièces à assembler. Ce blocage est réalisé de façon simple grâce à une coopération par la forme entre l'axe et la pièce. Il en résulte un blocage axial de la vis qui porte l'axe de pivotement.

Dans une forme de réalisation particulière, la vis est logée dans l'axe et l'axe et la vis sont adaptés pour coopérer de façon à ce que la vis entraîne l'axe en translation axiale, lorsqu'il est bloqué en rotation et que la vis est vissée dans la première pièce.

Le dispositif d'assemblage présente également l'avantage de se présenter sous la forme d'un module préassemblé comportant la vis préalablement logée dans l'axe de pivotement, le tout étant prêt à être intégré de façon simple par exemple au sein d'un bracelet de montre.

La zone de blocage en rotation de l'axe, par exemple une zone périphérique, peut être une forme saillante, une forme rentrante ou un méplat. De façon correspondante, la première pièce comporte une zone de forme complémentaire, respectivement rentrante, saillante ou en méplat.

L'axe peut comprendre plusieurs zones périphériques de blocage en rotation. Ces différentes zones peuvent par exemple former une denture.

Dans une forme de réalisation particulière, le dispositif d'assemblage comprend des moyens de tenue, notamment de tenue radiale, entre l'axe et la vis adaptés pour permettre un déplacement angulaire relatif entre l'axe et la vis.

Les moyens de tenue radiale permettent notamment de créer un couple exerçant une résistance à la rotation relative de la vis et de l'axe, tout en permettant un degré de liberté entre l'axe et la vis.

Lors de l'assemblage des deux pièces, il suffit à un opérateur de vaincre le couple de résistance exercé par les moyens de tenue radiale pour faire tourner la vis par rapport à l'axe qui est bloqué en rotation. Après montage, lorsque le dispositif d'assemblage assemble deux pièces, par exemple deux maillons d'un bracelet, il peut exister un jeu entre la zone périphérique de blocage en rotation de l'axe et la zone de forme correspondante de la première pièce. L'axe de pivotement est, dans ce cas, monté à jeu dans la première pièce. De ce fait, des chocs répétés peuvent induire un débattement résiduel de l'axe de pivotement. Ce débattement n'a toutefois pas d'incidence sur la vis car les moyens de tenue radiale permettent à l'axe de se déplacer angulairement par rapport à la vis. Celle-ci reste donc en position vissée, sans risque de dévissage, en dépit des éventuelles légères rotations répétées de l'axe.

En outre, grâce aux moyens de tenue radiale, lorsque le dispositif d'assemblage est préassemblé, la vis est logée dans l'axe mais ne tourne pas librement à l'intérieur de celui-ci.

Selon une première forme de réalisation, le dispositif d'assemblage comprend au moins un joint disposé entre la vis et l'axe, adapté pour exercer un couple de maintien entre la vis et l'axe assurant une tenue entre l'axe et la vis, notamment une tenue radiale entre l'axe et la vis. Dans ce cas, le ou les joints assurent la tenue, notamment la tenue radiale, entre l'axe et la vis tout en permettant une rotation de l'un par rapport à l'autre. Le ou les joints sont prévus pour se cisailler et ainsi préserver la vis.

Le joint peut par exemple être torique ou quadrilobe. D'autres types de joint peuvent bien entendu être utilisés.

Avantageusement, l'axe est solidarisé à la vis en translation axiale par coopération d'au moins une butée d'une portion interne de l'axe avec au moins une surface de butée portée par la vis.

L'axe peut être limité axialement par deux surfaces de butée portées par la vis, en particulier par le biais de deux butées ou portées internes de l'axe. Par exemple, la vis peut être composée de deux éléments distincts : l'un comportant une partie tête et une partie corps, ou intermédiaire, solidaires l'une de l'autre et séparées par une portée, et l'autre comportant une partie terminale filetée. Lorsque le dispositif d'assemblage est pré-assemblé, ces deux éléments sont introduits à l'intérieur de l'axe puis assemblés l'un à l'autre, par exemple par chassage ou soudage laser. Lors de l'assemblage, les portées internes de l'axe sont par exemple intercalées entre la portée séparant les parties tête et corps de la vis et une extrémité libre de la partie terminale de la vis.

Selon une deuxième forme de réalisation, l'axe et la vis portent des dentures respectives adaptées pour coopérer par crabotage, sous l'effet de moyens de rappel élastiques, de manière à exercer un couple de maintien assurant une tenue entre l'axe et la vis, notamment une tenue radiale entre l'axe et la vis.

Dans ce cas, l'accouplement des dentures respectives de l'axe et de la vis assure la tenue de l'axe et de la vis, notamment la tenue radiale. En outre, en cas de rotation relative de l'axe par rapport à la vis, induit par un débattement résiduel de l'axe ou lors du vissage, les moyens élastiques sollicitent les dentures pour les maintenir accouplées. Le débattement radial de l'axe est inférieur au pas angulaire des dents de la vis.

Avantageusement, les moyens de rappel élastiques comprennent un ressort hélicoïdal logé à l'intérieur de l'axe et entourant la vis, ledit ressort étant en appui contre une surface d'appui portée par la vis, à une extrémité, et contre une surface d'appui portée par l'axe, à une autre extrémité. Dans ce cas, et avantageusement encore, ledit ressort est précontraint par assemblage d'une partie terminale de la vis, portant un filetage, et de parties tête et intermédiaire de la vis qui sont solidaires l'une de l'autre.

Les dentures respectives de l'axe et de la vis peuvent être symétriques ou asymétriques. Des dentures asymétriques permettent de maximiser la taille des dents, ce qui facilite leur fabrication, et d'améliorer les sensations perçues par l'opération notamment lors du décrabotage, c'est-à-dire lors du désaccouplement des dentures.

L'axe et la vis peuvent être embrayés par crabot soit directement l'un avec l'autre, soit par l'intermédiaire d'une bague d'interface portant une première denture embrayée avec la denture de l'axe et une deuxième denture embrayée avec la denture de la vis.

Avantageusement, la vis est munie d'une tête disposée à une première extrémité ouverte de l'axe et une partie terminale portant un filetage et s'étendant hors de l'axe à une deuxième extrémité ouverte dudit axe

Avantageusement encore, la zone périphérique de blocage en rotation de l'axe est disposée à proximité de la première extrémité de l'axe.

L'invention concerne aussi un ensemble comportant au moins deux pièces attachées à l'aide du dispositif d'assemblage tel que précédemment défini.

L'invention concerne également un bracelet comportant au moins deux maillons attachés à l'aide du dispositif d'assemblage tel que précédemment défini.

L'invention concerne enfin un procédé d'assemblage à pivotement d'au moins deux pièces à l'aide du dispositif d'assemblage tel que précédemment défini, caractérisé en ce qu'il comprend, après introduction du dispositif d'assemblage dans une ouverture traversant une deuxième pièce, une étape de vissage lors de laquelle la vis est vissée dans une première pièce, et entraîne en translation axiale l'axe de guidage en pivotement du dispositif, qui est bloqué en rotation par coopération de sa zone de blocage en rotation avec la zone correspondante de la première pièce.

L'invention sera mieux comprise à l'aide de la description suivante de différentes formes de réalisation du dispositif d'assemblage à pivotement de l'invention en référence aux dessins annexés sur lesquels :
- La figure 1 représente un assemblage de deux maillons d'un bracelet comportant un dispositif d'assemblage selon une première forme de réalisation de l'invention, en cours de montage ;
- La figure 2 représente le dispositif d'assemblage selon la première forme de réalisation ;
- La figure 3 représente une vue en coupe axiale du dispositif d'assemblage selon la première forme de réalisation ;
- La figure 4 représente l'assemblage de la figure 1, après montage, en vue de coupe axiale selon A-A ;
- La figure 5 représente l'assemblage de la figure 1 en vue de coupe axiale selon B-B ;
- La figure 6 représente le dispositif d'assemblage selon une deuxième forme de réalisation ;
- La figure 7 représente une vue en coupe axiale du dispositif d'assemblage selon la deuxième forme de réalisation ;
- La figure 8 représente un assemblage de deux maillons comportant le dispositif d'assemblage selon la deuxième forme de réalisation, en vue de coupe axiale selon B-B ;
- La figure 9 représente le dispositif d'assemblage selon une troisième forme de réalisation ;
- La figure 10 représente une vue en coupe axiale du dispositif d'assemblage selon la troisième forme de réalisation ;
- La figure 11 représente un organigramme des étapes d'assemblage de deux maillons à l'aide du dispositif d'assemblage de la figure 3.

L'invention concerne un dispositif d'assemblage, ou d'articulation, à pivotement destiné à assembler aux moins deux pièces pouvant pivoter l'une par rapport à l'autre. Il peut être utilisé pour assembler des maillons, par exemple d'un bracelet tel qu'un bracelet de montre.

Les éléments identiques ou correspondants, qui sont représentés sur les différentes figures, portent les mêmes références, sauf indication contraire.

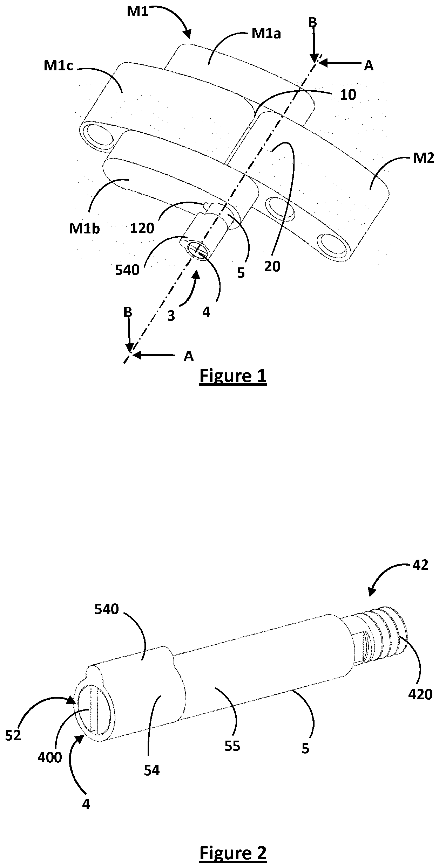

Les figures 1 à 5 concernent une première forme de réalisation du dispositif d'assemblage 3 de l'invention.

Sur la figure 1, on a représenté un assemblage de deux maillons de bracelet M1, M2 par le biais du dispositif d'assemblage 3, en cours de montage, selon une première forme de réalisation de l'invention.

Le maillon M1 est composé de deux mailles extérieures M1a, M1b solidarisées l'une à l'autre, de façon connue, notamment par une maille centrale M1c. Par le terme « maille », on entend ici désigner une unité, ou un élément simple, d'un maillon. En variante, le maillon M1 pourrait être monobloc. Les deux mailles extérieures M1a, M1b et la maille centrale M1c délimitent un logement central 10 de réception d'une portion d'extrémité latérale 20 du maillon M2 dont seule la maille centrale est représentée sur les figures.

En référence à la figure 2, le dispositif d'assemblage 3 comporte une vis 4 et un axe 5 de guidage en pivotement.

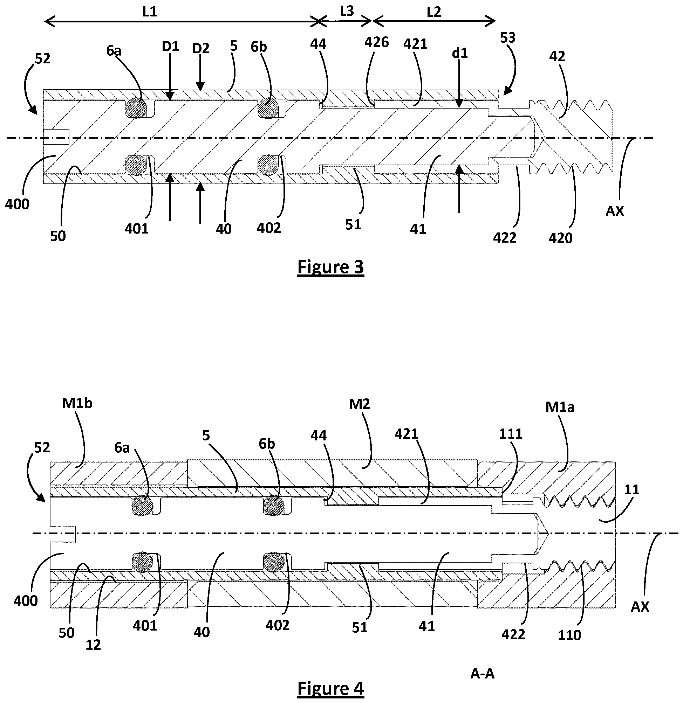

En référence à la figure 3, la vis 4 comprend une partie tête 40, de forme cylindrique et de diamètre D1, une partie intermédiaire (ou partie corps) 41, de forme cylindrique et de diamètre d1, et une partie terminale filetée 42. Le diamètre D1 est supérieur au diamètre d1.

La partie tête 40 intègre une tête de vis 400. Les parties tête 40 et intermédiaire (ou corps) 41 sont séparées par une portée annulaire 44. Elles sont solidaires l'une de l'autre et forment ici un composant monobloc.

La partie terminale 42 comprend une section filetée 420, à l'une de ses extrémités, et une section d'assemblage 421, à son autre extrémité, reliées l'une à l'autre par une section de jonction 422. La section d'assemblage 421 a une forme tubulaire de diamètres extérieur et intérieur respectivement égaux, ou sensiblement égaux, à D1 et d1. Elle est adaptée pour être insérée dans l'axe 5, par l'une de ses extrémités 53, tout en venant coiffer l'extrémité libre de la partie intermédiaire 41. La section filetée 420 a un diamètre extérieur ici égal ou sensiblement égal à D1. De préférence, le diamètre de la section filetée 420 est inférieur au diamètre extérieur de l'axe 5 de manière à ce que l'extrémité 53 de l'axe 5 forme une surface de butée destinée à positionner longitudinalement le dispositif d'assemblage relativement aux maillons en fin d'assemblage.

L'axe de guidage en pivotement 5 a une forme cylindrique tubulaire d'axe AX et comporte une première extrémité ouverte 52 et une deuxième extrémité ouverte 53. Il ménage un logement interne 50, cylindrique et coaxial à l'axe AX, de réception de la vis 4. Le diamètre interne de l'axe 5 est égal, ou sensiblement égal, à D1. On note D2 le diamètre externe de l'axe 5 , D2 étant bien entendu supérieur à D1.

Les diamètres D1, D2 et d1 sont représentés sur la figure 3.

La paroi interne de l'axe 5 est doté d'une portion 51 définissant au moins une butée, notamment deux butées, ayant ici une forme de nervure annulaire, dont la hauteur est sensiblement égale à la différence entre les diamètres D1 et d1 (D1-d1). En variante, la paroi interne de l'axe 5 pourrait porter plusieurs butées disposées le long d'une ligne formant un anneau.

En référence à la figure 2, l'axe 5 comporte, au voisinage de sa première extrémité 52, une section d'extrémité 54 portant une zone périphérique saillante 540, ou un renflement, de blocage en rotation. Dans l'exemple particulier de réalisation représenté sur les figures 1 et 2, la zone saillante 540 a globalement une forme semi-cylindrique d'axe parallèle à l'axe AX. Cette zone saillante 540 est destinée à être insérée dans une zone rentrante, ou cavité, de forme complémentaire, ménagée dans un maillon à assembler.

Sur la figure 3, on a représenté :
- une longueur axiale L1, qui correspond à la distance le long de l'axe AX entre la première extrémité ouverte 52 et une première butée de la portion annulaire 51,
- une longueur axiale L2, qui correspond à la distance le long de l'axe AX entre la deuxième extrémité ouverte 53 et une seconde butée de la portion annulaire 51,
- une longueur axiale L3 qui correspond à la dimension le long de l'axe AX de la portion 51 (autrement dit la largeur de la butée annulaire).

La longueur axiale de la partie tête 40 de la vis 4 est ici égale à la longueur L1. La longueur axiale de la partie intermédiaire 41 est légèrement supérieure à L2+L3. La longueur axiale de la section d'assemblage 421 de la partie terminale 42 de la vis 4 est ici égale à la longueur L2.

Le dispositif d'assemblage 3 comporte également deux joints toriques 6a, 6b disposés entre l'axe 5 et la vis 4, adaptés pour exercer un couple de résistance, notamment de friction, entre l'axe 5 et la vis 4, créant une résistance à la rotation relative de l'axe 5 et de la vis 4 et assurant ainsi un tenue radiale entre l'axe 5 et la vis 4, tout en permettant un degré de liberté entre l'axe et la vis. Le couple de résistance est déterminé pour permettre une rotation relative de l'axe 5 et de la vis 4, notamment lors du vissage de la vis dans le maillon M1 ainsi qu'en cas de débattement résiduel de l'axe 5. La vis 4 ménage deux gorges annulaires 401, 402 de réception des joints 6a, 6b, ici dans sa partie tête 40.

A la place de joints toriques, on pourrait utiliser toute forme de joint adaptée, par exemple des joints quadrilobes en vue de maximiser les surfaces de contact. On pourrait également utiliser un seul joint ou plus de deux joints de manière à créer une zone étanche où les conditions de friction ne sont pas influencées par la présence éventuelle de liquide.

Le maillon central M2 est traversé par un perçage 21 cylindrique de passage du dispositif d'assemblage 3, de diamètre égal ou sensiblement égal à D2, dans sa portion d'extrémité latérale 20.

La maille M1a comporte un trou 11 de réception de l'extrémité filetée 420 du dispositif d'assemblage 3, muni d'un taraudage 110. Le trou 11 traverse ici la maille M1a. En variante, il pourrait s'agir d'un trou borgne. Le trou 11 est légèrement plus large, à proximité de son embouchure sur le logement 10, de manière à former une portée 111 jouant le rôle de butée de positionnement de la vis 4 en fin de vissage.

La maille M1b est traversée par un perçage 12 de passage du dispositif d'assemblage 3, conformé pour loger la section d'extrémité 54 de l'axe 5. Le perçage 12 comporte une paroi cylindrique pourvue d'une zone rentrante 120, ou creuse, de forme complémentaire de la celle de la zone saillante 540 et destinée à loger celle-ci.

Le dispositif d'assemblage 3 est préassemblé par la mise en oeuvre des étapes décrites ci-après :

Lors d'une première étape, les joints toriques 6a, 6b sont mis en place dans les gorges annulaires 401, 402.

Lors d'une deuxième étape, le composant monobloc constitué de la partie tête 40 et de la partie intermédiaire 41 est introduit dans le logement 50 de l'axe 5, par la première extrémité ouverte 52 de celui-ci, jusqu'à ce que sa portée 44 vienne en appui contre, ou à proximité de la première butée de la portion annulaire 51 de l'axe 5.

Lors d'une troisième étape, la section d'assemblage 421 de la partie terminale 42 est introduite dans le logement 50 de l'axe 5, par la deuxième extrémité ouverte 53, et vient coiffer l'extrémité libre de la partie intermédiaire 41, jusqu'à ce que la surface annulaire 426 de l'extrémité libre de la section d'assemblage 421 vienne en appui contre, ou à proximité de la seconde butée formée par la portion annulaire 51.

A l'issue des deuxième et troisième étapes, la portion annulaire 51 de l'axe 5 est interposée entre deux surfaces de butée, constituées par la portée 44 et par la surface annulaire 423 de l'extrémité libre de la partie terminale 42. Un jeu est toutefois ménagé entre la portion 51 et les surfaces de butée 44 et 426 pour permettre une rotation de la vis.

Les deuxième et troisième étapes peuvent être réalisées dans un ordre quelconque ou en même temps.

A l'issue de ces étapes, le composant comportant les parties tête 40 et intermédiaire 41 peut être solidarisé à la partie terminale 42 de la vis 4 par chassage. Alternativement, la solidarisation de ces deux éléments peut être effectuée par soudage, notamment par soudage laser. La section filetée 420 de la partie terminale 42 s'étend hors de l'axe 5 et la tête de vis 400 est positionnée à l'extrémité ouverte 52 de l'axe 5. L'axe 5 est délimité axialement par rapport à la vis 4, par sa portion interne 51 interposée entre la portée 44 et l'extrémité libre 426 de la section d'assemblage 421 de la partie terminale 42. L'axe de pivotement 5 et la vis 4 sont ainsi rendus solidaires à moindre jeu en translation axiale. En outre, les joints 6a et 6b exercent un couple de friction entre l'axe 5 et la vis 4 qui crée une résistance à la rotation relative de la vis et de l'axe et assure une tenue radiale de l'un par rapport à l'autre.

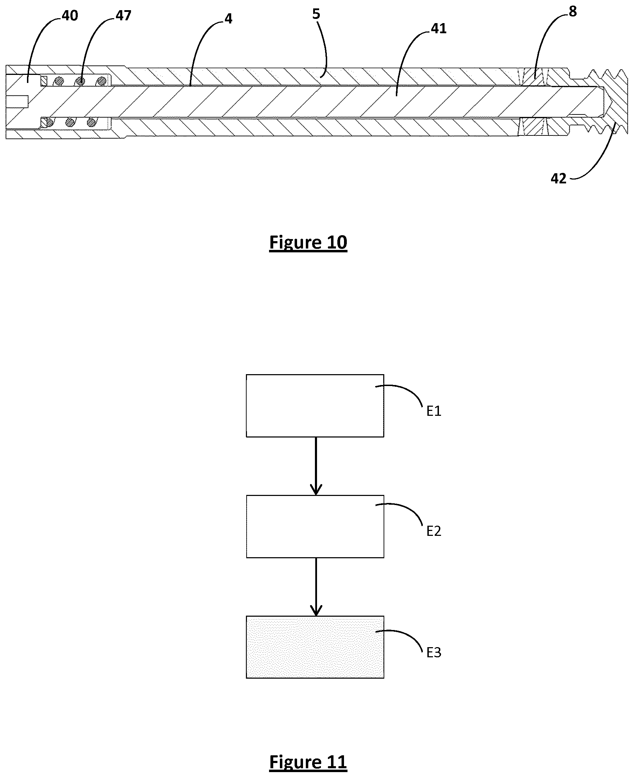

On va maintenant décrire, en référence à la figure 11, le procédé d'assemblage des deux maillons M1, M2 à l'aide du dispositif d'assemblage 2, déjà préassemblé.

Lors d'une première étape E1, les maillons M1 et M2 sont placés en position d'assemblage. A cet effet, la portion d'extrémité latérale 20 du maillon M2 est introduite dans le logement 10, entre les deux mailles M1a et M1b. Les ouvertures 11, 21 et 12 sont positionnées au droit les unes des autres de manière à former un passage de réception du dispositif d'assemblage 3.

Lors d'une deuxième étape E2, le dispositif d'assemblage 3 est introduit à travers le passage formé par les ouvertures 11, 21 et 12, jusqu'à ce que la zone saillante 540 de l'axe 5 pénètre légèrement dans le logement 120, ce qui assure un blocage en rotation de l'axe de guidage 5 par rapport à la vis 4.

Le procédé comprend ensuite une étape de vissage E3. Lors de cette étape E3, la vis 4 est tournée, par exemple par un opérateur, par entraînement en rotation de la tête de vis 400 à travers l'extrémité ouverte 52 de l'axe 5. La force de vissage exercée pour faire tourner la vis 4 doit être supérieure au couple de friction exercé par les joints toriques 6a, 6b. Autrement dit, l'opérateur doit vaincre le couple de friction exercé par les joints 6a, 6b.

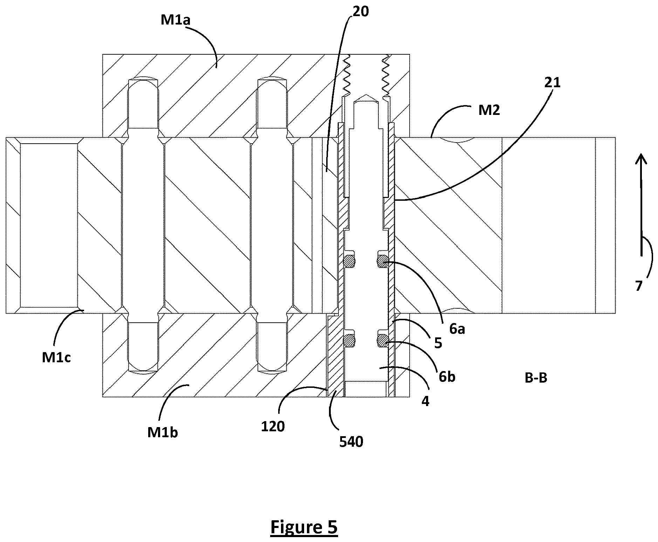

Sous l'action d'être tournée, la vis 4 se déplace selon un mouvement hélicoïdal comportant une composante axiale dirigée dans le sens de vissage tel que représenté par une flèche 7 sur la figure 5 dès que l'extrémité filetée 420 s'engage dans le taraudage 110 de la maille M1a. Lors de son déplacement hélicoïdal, la vis 4 entraîne en translation axiale l'axe 5 qui est solidaire en translation axiale de la vis 4 et bloqué en rotation par coopération de sa zone saillante 540 et de la zone rentrante 120 du maillon M1. Ainsi, lors du vissage de la vis 4 dans le trou taraudé 11 du maillon M1, l'axe 5 pénètre dans le passage formé par les ouvertures 11, 21 et 12 selon un mouvement de translation axiale, dans le sens 7.

Le dispositif d'assemblage 3 pénètre ainsi dans le passage formé par les ouvertures 11, 21 et 12 traversant les maillons M1 et M2, par déplacement hélicoïdal de la vis 4 et translation axiale de l'axe 5, jusqu'à ce que par exemple l'extrémité 53 de l'axe 5 vienne buter contre la portée 111 de la maille M1a. Le dispositif d'assemblage 3 est ainsi positionnée longitudinalement (c'est-à-dire selon la direction de l'axe AX) par rapport aux maillons M1 et M2.

Le positionnement longitudinal du dispositif d'assemblage 3 par rapport aux maillons M1 et M2 pourrait être réalisé par une butée alternative ou additionnelle contre laquelle la vis 4 vient en butée. Par exemple, dans le cas d'un trou taraudé 11 borgne, la butée additionnelle pourrait être constituée par le fond du trou.

A l'issue de l'étape de vissage E3, l'extrémité filetée 420 est entièrement engagée dans le taraudage 110 et la totalité de la zone saillante 540 de l'axe 5 est logée dans la zone rentrante 120 de la maille M1b, comme représenté sur la figure 5. Le maintien axial de l'axe de pivotement 5 vis-à-vis des maillons M1, M2 est opéré par la force exercée par les filets 420 de la vis 4 au sein du trou taraudé 11 du maillon M1. Les maillons M1 et M2 sont ainsi assemblés, le maillon M2 pouvant pivoter par rapport au maillon M1 autour de l'axe de pivotement 5.

Lors du porter du bracelet ou de chocs, des contacts répétitifs entre la surface extérieure 55 de l'axe 5 et la paroi interne du trou 21 du maillon central M2 se produisent. Cela induit de légers déplacements angulaires de l'axe 5 par rapport au maillon extérieur M1. Ces déplacements angulaires sont réduits au minimum par la zone saillante 540 de l'axe 5 qui est bloquée en rotation par la zone rentrante 120 du maillon M1 et vient buter contre la paroi de celle-ci. Toutefois, il peut exister un jeu angulaire entre les zones de blocage respectives 540, 120 de l'axe 5 et du maillon M1, qui est susceptible de produire un débattement résiduel de l'axe 5 par rapport au maillon M1. Un tel phénomène n'a cependant pas d'incidence sur la vis 4 grâce à l'action des joints 6a et 6b. En effet, ceux-ci sont adaptés pour se cisailler relativement aux surfaces de contact de l'axe 5 et des gorges annulaires 401, 402. Les joints 6a, 6b permettent ainsi un léger déplacement angulaire de l'axe 5 par rapport à la vis 4, qui permet d'absorber le débattement résiduel de l'axe 5 par rapport au maillon M1 sans entraîner en rotation la vis 4. Grâce à cela, la vis 4 n'est pas impactée par les contacts répétés entre le maillon central M2 et l'axe 5. Elle reste dans sa position vissée. Le risque de dévissage intempestif est ainsi éliminé. Complémentairement aux effets des joints 6a, 6b, un jeu peut également être créé entre la partie corps 41 de la vis et la partie terminale 42. Pour ce faire, la partie terminale 42 peut être montée à jeu sur la partie corps 41 de la vis, par exemple par le biais d'une clavette ou d'une baïonnette.

Pour démonter le dispositif d'assemblage 3, afin de désolidariser les maillons M1 et M2, il suffit à un opérateur de tourner la vis 4 dans le sens de dévissage, par le biais de la tête de vis 400, en exerçant un couple de dévissage supérieur au couple de friction exercé par les joints 6a, 6b. Sous l'action d'être tournée dans le sens de dévissage, la vis 4 effectue un mouvement hélicoïdal qui comporte une composante de translation axiale dans le sens opposé au sens 7. La vis 4, ainsi déplacée, entraîne en translation axiale l'axe de pivotement 5, qui est bloqué en rotation et solidaire en translation axiale de la vis 4, dans le sens opposé au sens 7. Il en résulte que l'axe 5 sort de la maille M1b avec la vis 4 logée à l'intérieur.

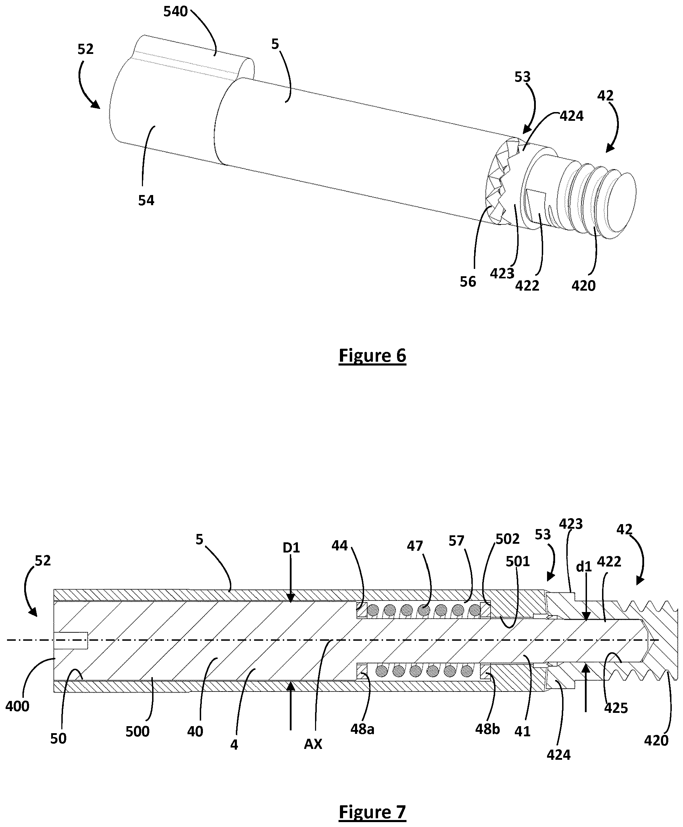

Les figures 6 à 8 représentent une deuxième forme de réalisation du dispositif d'assemblage 3 de l'invention. Par souci de clarté, seuls les éléments qui diffèrent de la première forme de réalisation décrite vont maintenant être décrits.

Dans cette deuxième forme de réalisation, la tenue radiale entre l'axe de pivotement 5 et la vis 4 est assurée par des dentures 56 et 424 respectivement portées par l'axe 5 et la vis 4, à la place des joints 6a, 6b. Par le biais de ces dentures 56, 424, l'axe 5 et la vis 4 sont agencés pour coopérer par crabotage, sous l'action de rappel d'un ressort hélicoïdal 47, de manière à exercer un couple de crabot s'opposant à la rotation relative de l'axe 5 et de la vis 4 et assurant une tenue radiale entre l'axe 5 et la vis 4. Le pas angulaire entre les dents est adapté pour être supérieur au débattement angulaire résiduel de l'axe 5 lorsque celui-ci est bloqué en rotation à jeu dans le maillon M1.

La vis 4 comprend une partie tête 40, une partie intermédiaire 41 et une partie terminale 42.

La partie tête 40, de diamètre D1, est solidaire de la partie intermédiaire 41, de diamètre d1 (inférieur à D1), et forme avec celle-ci un composant monobloc. Ces deux parties 40, 41 sont séparées par une portée d'appui 44, contre laquelle le ressort hélicoïdal 47 est destiné à venir en appui à l'une de ses deux extrémités. La longueur axiale du composant 40-41 est supérieure à la longueur de l'axe de pivotement 5, l'extrémité libre de la partie intermédiaire 41 étant destinée à faire saillie hors de l'axe 5 à travers la deuxième extrémité 53 de celui-ci lorsque le dispositif 3 est préassemblé.

La partie terminale 42 comporte une section filetée 420, à une première extrémité, et une section d'assemblage 423 portant la denture 424, à une deuxième extrémité, les deux sections 420 et 423 étant reliées par une section de jonction 422. Une ouverture axiale 425, ayant la forme d'un trou borgne, de réception de l'extrémité libre de la partie intermédiaire 41 est ménagée dans la partie terminale 42, à la deuxième extrémité de celle-ci.

L'axe 5 comporte un logement interne 50, cylindrique et coaxial, de réception de la vis 4. Le logement 50 comprend une première section 500 de diamètre interne égal ou sensiblement égal à D1, comportant l'extrémité 52, et une deuxième section 501, comportant l'extrémité 53, de diamètre égal ou sensiblement égal à d1. Les deux sections 500 et 501 sont séparées par une portée 502 d'appui du ressort hélicoïdal 47. Les dentures 56 sont portées par l'extrémité 53 de l'axe 5. La longueur axiale de la première section 500 du logement 50 est supérieure à la longueur axiale de la partie tête 40 de la vis 4 de manière à ménager un logement 57 de réception du ressort 47.

Les dentures 424 et 56 sont ici symétriques.

Le ressort 47 est en appui contre la portée 44, par l'intermédiaire d'une rondelle 48a, à l'une de ses extrémités, et contre la portée 502, par l'intermédiaire d'une autre rondelle 48b, à son autre extrémité.

L'axe 5 porte une zone de blocage en rotation 540, ici saillante.

Le dispositif d'assemblage est préassemblé de la façon suivante.

Lors d'une première étape, la rondelle 48a, le ressort 47 et la rondelle 48b sont successivement placés sur la partie intermédiaire 41.

Lors d'une deuxième étape, le composant monobloc 40-41 sur lequel le ressort 47 et les rondelles 48a, 48b sont placés, est introduit dans l'axe 5, par l'extrémité 52, jusqu'à ce que la tête de vis 400 vienne se loger à l'intérieur de l'axe 5, à proximité de l'extrémité 52. Dans cette position, l'extrémité libre de la partie intermédiaire 41 fait saillie hors de l'axe 5 par l'extrémité 53 et le ressort 47, en appui contre les portées 44 et 502 par le biais des rondelles 48a, 48b, est précontraint.

Lors d'une troisième étape, la partie terminale 42 est assemblée à l'extrémité libre de la partie intermédiaire 41, par introduction et chassage de celle-ci dans l'ouverture 425. La partie terminale 42 vient ainsi coiffer l'extrémité libre saillante de la partie intermédiaire 41. Lors de l'assemblage, les dentures 56 et 424 sont accouplées, ou embrayées, directement l'une à l'autre. L'axe 5 et la vis 4 coopèrent ainsi par crabotage, sous l'effet de rappel du ressort 47, de manière à exercer un couple de crabot exerçant une résistance à la rotation relative de l'axe 5 et de la vis 4.

Le procédé d'assemblage de deux maillons M1 et M2 à l'aide du dispositif d'assemblage 3 selon la deuxième forme de réalisation est analogue à celui précédemment décrit, à la différence que le couple de vissage doit être supérieur au couple de crabot exercé par les dentures accouplées 56, 424.

Comme précédemment explicité, lors du porter du bracelet ou lors de chocs, l'axe 5 est bloqué en rotation par sa zone saillante 540 qui coopère avec la zone rentrante 120 du maillon M1. En outre, la vis 4 n'est pas impactée par un éventuel débattement résiduel de l'axe 5 par rapport au maillon M1 grâce aux dentures crabotées 56, 424 qui permettent un déplacement angulaire relatif entre l'axe 5 et la vis 4. En effet, les dentures 56, 424 sont prévues pour s'écarter l'une de l'autre contre l'action de rappel du ressort 47 sous l'effet de la dynamique de l'axe 5.

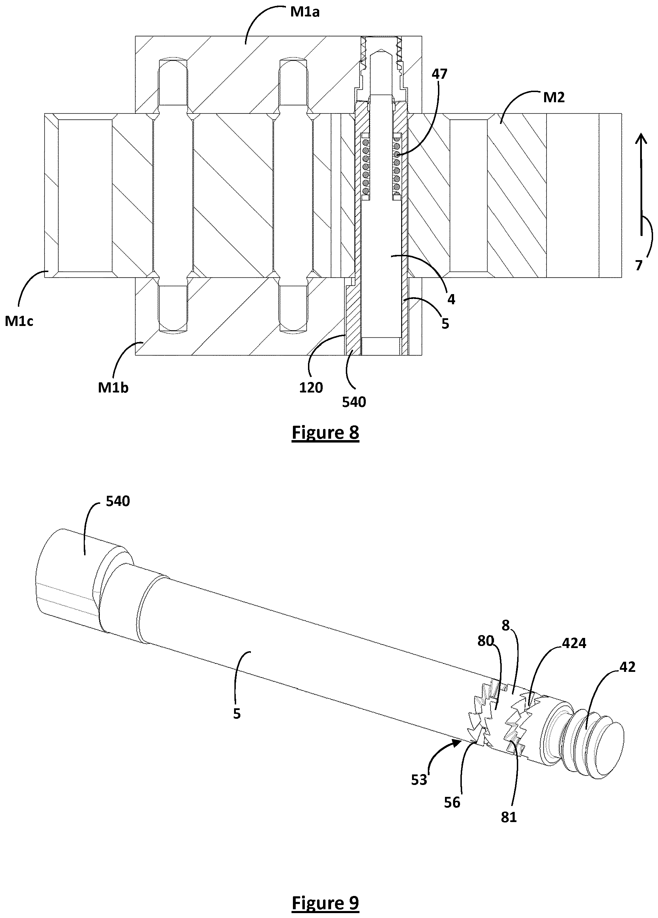

Les figures 9 et 10 représentent une variante de réalisation du dispositif d'assemblage qui diffère de la deuxième forme de réalisation par le fait que la denture 56 de l'axe 5 et la denture 424 de la partie terminale 42 ne sont pas accouplées directement l'une à l'autre mais par l'intermédiaire d'une bague additionnelle d'interface 8 qui porte une première denture 80, destinée à s'accoupler avec la denture 56 portée par l'extrémité 53 de l'axe 5, et une deuxième denture 81, destinée à s'accoupler avec la deuxième denture 424 portée par la partie terminale 42. Les deux jeux de dentures (56, 80) et (81, 424) sont ici asymétriques.

Le ressort hélicoïdal 47 est ici logé au voisinage de la tête de vis 400.

Le dispositif d'assemblage 3 selon la troisième forme de réalisation est préassemblé de manière analogue à ce qui a été précédemment décrit relativement à la deuxième forme de réalisation. La partie terminale 42 est assemblée à l'extrémité libre de la partie intermédiaire 41 avec interposition de la bague d'interface 8. La bague 8 est placée sur l'extrémité libre de la partie intermédiaire 41 et les dentures 56 et 80 sont embrayées. L'extrémité libre de la partie intermédiaire 41 est ensuite introduite dans l'ouverture de réception 425 de la partie terminale 42 et les dentures 81 et 424 sont embrayées. Lors du pré-assemblage du dispositif 3, le ressort 47 est précontraint. Les deux jeux de dentures (56, 80) et (81, 424) sont crabotés sous l'action du ressort 47 et s'opposent à la rotation relative de l'axe 5 et de la vis 4.

L'utilisation de deux jeux de dentures asymétriques permet de faciliter la fabrication et de réaliser soit des dents plus grosses que celles de la deuxième forme de réalisation, pour un même nombre de positions d'indexage entre l'axe 5 et la vis 4, soit plus de dents et plus de positions d'indexage entre l'axe 5 et la vis 4 , ce qui améliore les sensations perçues par l'opérateur lors du décrabotage.

Le ressort 47 peut être logé en une position quelconque le long de l'axe 5. En toute hypothèse, il est en appui contre la portée 44 séparant la partie tête 40 et la partie intermédiaire 41 de la vis 4, à l'une de ses extrémités, et contre la portée séparant les deux sections 500 et 501 de l'axe 5 comportant respectivement un passage de diamètre D1 et un passage de diamètre d1.

Dans la description qui précède, les parties tête 40 et intermédiaire, ou corps, 41 et la partie terminale 42 sont solidarisées par chassage. Elles pourraient être solidarisées par tout moyen adapté, par exemple par soudage.

Dans la description qui précède, le blocage en rotation de l'axe de pivotement 5 par rapport au maillon M1 est réalisé par coopération d'une zone périphérique saillante 540 portée par l'axe 5 avec une zone rentrante 120 prévue dans le maillon M1. En variante, la zone périphérique de blocage de l'axe 5 pourrait présenter soit la forme d'une zone rentrante destinée à coopérer avec une zone saillante de forme complémentaire du maillon M1, soit la forme d'un méplat destiné à coopérer avec un méplat correspondant du maillon M1.

Par ailleurs, dans la description qui précède, la zone de blocage saillante 540 de l'axe 5 a une forme globalement semi-circulaire en section transversale (perpendiculairement à l'axe AX). D'autres formes sont bien entendu envisageables, par exemple une forme en U ou en V, ou toute autre forme adaptée.

On pourrait également prévoir plusieurs zones de blocage à la périphérie de l'axe de pivotement, par exemple sous la forme d'une denture. Dans ce cas, bien entendu, le maillon 1 serait pourvu d'un même nombre de zones de blocage de formes correspondantes.

## Revendications

1. Dispositif d'assemblage pour attacher à pivotement au moins deux pièces (M1, M2), comportant une vis (4) destinée à être vissée dans une première pièce (M1) et portant un axe (5) de guidage en pivotement d'une deuxième pièce (M2), **caractérisé en ce que** l'axe (5) comprend au moins une zone (540) de blocage en rotation ayant une forme adaptée pour coopérer avec une zone de forme correspondante de la première pièce (M1), afin de bloquer en rotation ledit axe (5).

2. Dispositif selon la revendication précédente, **caractérisée en ce que** la vis (4) est logée dans l'axe (5) et **en ce que** l'axe (5) et la vis (4) sont adaptés pour coopérer de façon à ce que la vis (4) entraîne l'axe (5) en translation axiale, lorsqu'il est bloqué en rotation et que la vis (4) est vissée dans la première pièce (M1).

3. Dispositif selon l'une des revendications précédentes, **caractérisé en ce que** ladite zone (540) de blocage en rotation est une zone périphérique (540) de blocage en rotation et présente notamment l'une des formes du groupe comportant une forme saillante, une forme rentrante et un méplat.

4. Dispositif selon l'une des revendications précédentes, **caractérisé en ce qu'**il comprend des moyens de tenue, notamment de tenue radiale, (6a, 6b ; 56, 424 ; 8, 56, 424) entre l'axe (5) et la vis (4) adaptés pour permettre un déplacement angulaire relatif entre l'axe (5) et la vis (4).

5. Dispositif selon l'une des revendications précédentes, **caractérisé en ce qu'**il comprend au moins un joint (6a, 6b) disposé entre la vis (4) et l'axe (56), adapté pour exercer un couple de maintien entre la vis et l'axe assurant une tenue entre l'axe et la vis, notamment une tenue radiale entre l'axe et la vis.

6. Dispositif selon l'une des revendications précédentes, **caractérisé en ce que** l'axe (5) est solidarisé à la vis (4) en translation axiale par coopération d'au moins une butée d'une portion interne (51) de l'axe avec au moins une surface de butée (44, 426) portée par la vis (4).

7. Dispositif selon l'une des revendications précédentes, **caractérisé en ce que** l'axe et la vis portent des dentures respectives adaptées pour coopérer par crabotage, sous l'effet de moyens de rappel élastiques, de manière à exercer un couple de maintien assurant une tenue entre l'axe et la vis, notamment une tenue radiale entre l'axe et la vis.

8. Dispositif selon la revendication précédente, **caractérisé en ce que** les moyens de rappel élastiques comprennent un ressort hélicoïdal (47) logé à l'intérieur de l'axe (5) et entourant la vis (4), ledit ressort étant en appui contre une surface d'appui (44) portée par la vis (4), à une extrémité, et contre une surface d'appui (502) portée par l'axe (5), à une autre extrémité.

9. Dispositif selon la revendication précédente, **caractérisé en ce que** ledit ressort (47) est précontraint par assemblage d'une partie terminale (42) de la vis, portant un filetage, et de parties tête (40) et intermédiaire (41) de la vis (4) qui sont solidaires l'une de l'autre.

10. Dispositif selon l'une des revendications 2 à 9, **caractérisé en ce que** la vis (4) est munie d'une tête (400) disposée à une première extrémité ouverte (52) de l'axe (5) et une partie terminale (42) portant un filetage et s'étendant hors de l'axe à une deuxième extrémité ouverte (53) dudit axe (5).

11. Dispositif selon la revendication précédente, **caractérisé en ce que** la zone périphérique (540) de blocage en rotation de l'axe (5) est disposée à proximité de la première extrémité (52) de l'axe.

12. Ensemble comportant au moins deux pièces attachées à l'aide du dispositif d'assemblage selon l'une des revendications 1 à 11.

13. Bracelet comportant au moins deux maillons attachés à l'aide du dispositif d'assemblage selon l'une des revendications 1 à 11.

14. Procédé d'assemblage à pivotement d'au moins deux pièces (M1, M2) à l'aide du dispositif d'assemblage (3) selon l'une des revendications 2 à 11, **caractérisé en ce qu'**il comprend, après introduction du dispositif d'assemblage (3) dans une ouverture (21) traversant une deuxième pièce (M2), une étape de vissage lors de laquelle la vis (4) est vissée dans une première pièce (M1), et entraîne en translation axiale l'axe de guidage en pivotement (5) du dispositif (3), qui est bloqué en rotation par coopération de sa zone de blocage en rotation avec la zone correspondante de la première pièce (M1).

## Patentansprüche

1. Vorrichtung zum drehbaren Zusammenbau von mindestens zwei Teilen (M1, M2), umfassend eine Schraube (4), die dazu vorgesehen ist, in ein erstes Teil (M1) eingeschraubt zu werden und die eine drehbare Führungsachse (5) eines zweiten Teils (M2) trägt, **dadurch gekennzeichnet, dass** die Achse (5) mindestens einen Drehsicherungsbereich (540) umfasst, der eine Form aufweist, die dazu geeignet ist, mit einem Bereich einer entsprechenden Form des ersten Teils (M1) zusammenzuwirken, um die Drehung der genannten Achse (5) zu blockieren.

2. Vorrichtung gemäß dem vorangehenden Anspruch, **dadurch gekennzeichnet, dass** die Schraube (4) in der Achse (5) aufgenommen ist und dass die Achse (5) und die Schraube (4) so ausgebildet sind, dass sie derart zusammenwirken, dass die Schraube (4) die Achse (5) in axialer Richtung zu einer Drehbewegung antreibt, wenn sie in der Drehbewegung blockiert ist und dass die Schraube (4) in das erste Teil (M1) eingeschraubt wird.

3. Vorrichtung gemäß einem der vorangehenden Ansprüche, **dadurch gekennzeichnet, dass** der genannte Drehsicherungsbereich (540) ein Umfangsbereich zur Drehsicherung (540) ist und dass er insbesondere eine der Formen aufweist, aus der Gruppe, umfassend eine vorstehende Form, eine einspringende Form und eine Abflachung.

4. Vorrichtung gemäß einem der vorangehenden Ansprüche, **dadurch gekennzeichnet, dass** sie Haltemittel umfasst, insbesondere zur radialen Halterung, (6a, 6b; 56, 424, 8, 56, 424) zwischen der Achse (5) und der Schraube (4), die so ausgebildet sind, dass sie eine relative Winkelbewegung zwischen der Achse (5) und der Schraube (4) zulassen.

5. Vorrichtung gemäß einem der vorangehenden Ansprüche, **dadurch gekennzeichnet, dass** sie mindestens eine Dichtung (6a, 6b) umfasst, die zwischen der Schraube (4) und der Achse (56) angeordnet ist und so ausgebildet ist, dass sie ein Haltemoment zwischen der Schraube und der Achse ausübt und dabei für einen Halt zwischen der Achse und der Schraube sorgt, insbesondere für einen radialen Halt zwischen der Achse und der Schraube.

6. Vorrichtung gemäß einem der vorangehenden Ansprüche, **dadurch gekennzeichnet, dass** die Achse (5) fest mit der Schraube (4) in axialer Richtung verbunden ist durch das Zusammenwirken mindestens eines Anschlags in einem inneren Bereich (51) der Achse mit mindestens einer sich auf der Schraube (4) befindenden Anschlagfläche (44, 426).

7. Vorrichtung gemäß einem der vorangehenden Ansprüche, **dadurch gekennzeichnet, dass** die Achse und die Schraube Verzahnungen aufweisen, die jeweils so angepasst sind, dass sie über elastische Rückstellelemente klauenartig ineinander wirken, so dass sie ein Haltemoment ausüben, welches einen Halt zwischen der Achse und der Schraube sicherstellt, insbesondere einen radialen Halt zwischen der Achse und der Schraube.

8. Vorrichtung gemäß dem vorangehenden Anspruch, **dadurch gekennzeichnet, dass** die elastischen Rückstellelemente eine Schraubenfeder (47) umfassen, die im Inneren der Achse (5) angeordnet ist und die Schraube (4) umgibt, wobei die genannte Feder einenends an einer sich auf der Schraube (4) befindenden Anlagefläche (44) anliegt und anderenends an einer sich auf der Achse (5) befindlichen Anlagefläche (502) anliegt.

9. Vorrichtung gemäß dem vorangehenden Anspruch, **dadurch gekennzeichnet, dass** die genannte Feder (47) vorgespannt ist durch die Verbindung eines Endbereichs (42) der Schraube, der ein Gewinde trägt, und Kopfteilen (40) sowie Zwischenteilen (41) der Schraube (4), die fest miteinander verbunden sind.

10. Vorrichtung gemäß einem der Ansprüche 2 bis 9, **dadurch gekennzeichnet, dass** die Schraube (4) mit einem Kopf (400) ausgestattet ist, der an einem ersten offenen Ende (52) der Achse (5) angeordnet ist und einem Endabschnitt (42), der ein Gewinde trägt und der sich außerhalb der Achse an einem zweiten offenen Ende (53) der genannten Achse (5) erstreckt.

11. Vorrichtung gemäß dem vorangehenden Anspruch, **dadurch gekennzeichnet, dass** der Umfangsbereich (540) zur Drehsicherung der Achse (5) nahe des ersten Endes (52) der Achse angeordnet ist.

12. Einheit, umfassend mindestens zwei Teile, die mit Hilfe der Vorrichtung zum Zusammenbau gemäß einem der Ansprüche 1 bis 11 verbunden sind.

13. Armband, umfassend mindestens zwei Glieder, die mit Hilfe der Vorrichtung zum Zusammenbau gemäß einem der Ansprüche 1 bis 11 verbunden sind.

14. Verfahren zum drehbaren Zusammenbau von mindestens zwei Teilen (M1, M2) mit Hilfe der Vorrichtung zum Zusammenbau (3) gemäß einem der Ansprüche 2 bis 11, **dadurch gekennzeichnet, dass** es nach dem Einführen der Vorrichtung zum Zusammenbau (3) in eine ein zweites Teil (M2) durchgreifende Öffnung (21) einen Schritt des Schraubens umfasst, während dessen die Schraube (4) in ein erstes Teil (M1) eingeschraubt wird und in axialer Richtung die drehbare Führungsachse (5) der Vorrichtung (3) antreibt, deren Drehung blockiert wird durch das Zusammenwirken ihres Drehsicherungsbereichs mit dem entsprechenden Bereich des ersten Teils (M1).

## Claims

1. An assembly device for pivotably attaching at least two components (M1, M2), comprising a screw (4) intended to be screwed into a first component (M1) and bearing a guide pin (5) guiding the pivoting of a second component (M2), **characterized in that** the pin (5) comprises at least one rotation-prevention zone (540) having a shape designed to collaborate with a zone of corresponding shape of the first component (M1), so as to prevent said pin (5) from rotating.

2. The device as claimed in the preceding claim, **characterized in that** the screw (4) is housed in the pin (5) and **in that** the pin (5) and the screw (4) are designed to collaborate in such a way that the screw (4) drives the pin (5) in axial translation when it is prevented from rotating and the screw (4) is being screwed into the first component (M1).

3. The device as claimed in either of the preceding claims, **characterized in that** said rotation-preventing zone (540) is a peripheral rotation-preventing zone (540) and notably has one of the shapes from the group comprising a projecting shape, a reentrant shape and a flat.

4. The device as claimed in one of the preceding claims, **characterized in that** it comprises retention means, notably radial retention means, (6a, 6b; 56, 424; 8, 56, 424) between the pin (5) and the screw (4) and designed to allow a relative angular movement between the pin (5) and the screw (4).

5. The device as claimed in one of the preceding claims, **characterized in that** it comprises at least one seal (6a, 6b) positioned between the screw (4) and the pin (56), designed to exert a retention torque between the screw and the pin providing retention between the pin and the screw, notably radial retention between the pin and the screw.

6. The device as claimed in one of the preceding claims, **characterized in that** the pin (5) is secured to the screw (4) in terms of axial translation through the collaboration of at least one stop of an internal portion (51) of the pin with at least one stop surface (44, 426) borne by the screw (4).

7. The device as claimed in one of the preceding claims, **characterized in that** the pin and the screw bear respective toothsets designed to collaborate by claw coupling, under the effect of elastic return means, so as to exert retention torque providing retention between the pin and the screw, notably radial retention between the pin and the screw.

8. The device as claimed in the preceding claim, **characterized in that** the elastic return means comprise a helical spring (47) housed inside the pin (5) and surrounding the screw (4), said spring pressing against a bearing surface (44) borne by the screw (4), at one end, and against a bearing surface (502) borne by the pin (5), at another end.

9. The device as claimed in the preceding claim, **characterized in that** said spring (47) is preloaded by assembling an end part (42) of the screw, bearing a screw thread, and a head part (40) and intermediate part (41) of the screw (4) which are joined to one another.

10. The device as claimed in one of claims 2 to 9, **characterized in that** the screw (4) is equipped with a head (400) arranged at an open first end (52) of the pin (5) and an end part (42) bearing a screw thread and extending out of the pin at an open second end (53) of said pin (5).

11. The device as claimed in the preceding claim, **characterized in that** the peripheral rotation-preventing zone (540) of the pin (5) is arranged near the first end (52) of the pin.

12. An assembly comprising at least two components attached using the assembly device as claimed in one of claims 1 to 11.

13. A bracelet comprising at least two links attached using the assembly device as claimed in one of claims 1 to 11.

14. A method of pivotably assembling at least two components (M1, M2) using the assembly device (3) as claimed in one of claims 2 to 11, **characterized in that** it comprises, after the assembly device (3) has been introduced into an opening (21) passing through a second component (M2), a screwing step during which the screw (4) is screwed into a first component (M1) and drives in axial translation the pivoting-guiding guide pin (5) of the device (3), which is prevented from rotating through the collaboration of its rotation-preventing zone with the corresponding zone of the first component (M1).
